# EUROPÄISCHE PATENTSCHRIFT

(11) **EP 3 523 548 B1**
(45) Veröffentlichungstag und Bekanntmachung des Hinweises auf die Patenterteilung: **09.12.2020**
(21) Anmeldenummer: 17791555.0
(22) Anmeldetag: 05.10.2017
(51) Int. Cl.: F16D 25/08

(54) **HYDROSTATISCHER AKTOR MIT ZWEIGETEILTEM DYNAMISCHEN DICHTABSCHNITT**
HYDROSTATIC ACTUATOR WITH A SPLIT DYNAMIC SEAL PORTION
ACTIONNEUR HYDROSTATIQUE COMPRENANT UNE PARTIE D'ÉTANCHÉITÉ DYNAMIQUE DIVISÉE EN DEUX

(30) Priorität: 07.10.2016 DE 102016219443
(43) Veröffentlichungstag der Anmeldung: 14.08.2019
(73) Patentinhaber: Schaeffler Technologies AG & Co. KG, 91074 Herzogenaurach (DE)
(72) Erfinder: EHRLICH, Matthias, 77815 Bühl (DE)
(86) Internationale Anmeldenummer: PCT/DE2017/100847
(87) Internationale Veröffentlichungsnummer: WO 2018/065013

(56) Entgegenhaltungen:
- EP-A1- 0 504 906
- WO-A1-88/09889
- DE-A1- 10 314 962
- GB-A- 2 273 541

## Beschreibung

Die Erfindung betrifft einen hydrostatischen Aktor für eine Kraftfahrzeugbaugruppe, mit einem Kolben, der innerhalb eines Gehäuses längsverschieblich angeordnet ist. Zwischen der Mantelfläche des Kolbens und dem Gehäuse ist eine Dichtung fluiddichtend eingesetzt ist. Die Dichtung besitzt einen Befestigungsbereich, an dem sie statisch dichtend an dem Gehäuse oder dem Kolben anliegt beziehungsweise eingesetzt / befestigt ist, und einen Dichtlippenbereich, an dem sie zu dem sich relativ zum Befestigungsbereich verlagerbaren / verfahrbaren Kolben oder dem Gehäuse dynamisch dichtend anliegt. Solche hydrostatischen Aktoren werden etwa eingesetzt, um Kupplungen oder Bremsen zu betätigen und bieten den Vorteil, dass durch sie, aufgrund des zumindest annäherungsweise inkompressiblen Hydraulikfluids, hohe Kräfte bei einem flexiblen Kraftübertragungsweg übertragbar sind.

Aus dem Stand der Technik sind gattungsgemäße hydrostatische Aktoren bekannt. Siehe EP 0504906 und DE 10314962. So offenbart die deutsche Patentanmeldung DE 10 2015 201596 A1 einen Geberzylinder von einer Druckmittelbetätigungsvorrichtung für eine hydraulische Kupplung oder Bremse, mit einem Zylinder und einem darin verlagerbar angeordneten Kolben. Zwischen einer Kolbenwand und einer Zylinderwand ist zumindest eine Dichtungsanordnung vorgesehen, um eine Abdichtung zwischen dem Kolben und dem Zylinder zu gewährleisten. Hierzu werden ringförmige Dichtungen eingesetzt, die in eine Ringnut einer Wandung des Kolbens oder des Zylinders eingesetzt werden, und sich im Betrieb des Geberzylinders sowohl an einer Wand des Kolbens, als auch an einer des Zylinders dichtend abstützen. Die Dichtung weist für diesen Zweck eine statische Dichtlippe, die keine Relativbewegung zu ihrem Sitz bzw. ihrer Anlagefläche aufweist, und eine dynamische Dichtlippe, die für einen gleitenden Kontakt mit einer Anlagefläche ausgelegt ist, auf.

Bekanntermaßen sind die Dichteigenschaften einer Dichtung in großem Maße abhängig von der Temperatur, da die Elastizität, die ein Anpressen besonders der dynamischen Dichtlippe ermöglicht, mit sinkender Temperatur abnimmt.

Um auch bei niedrigen Temperaturen eine zuverlässige Dichtung zu realisieren, offenbart der Stand der Technik, insbesondere in Form des vorstehend genannten Dokuments, eine Dichtung, die ein Heizelement aufweist. Dieses ist dazu ausgelegt, zu jedem Betriebszeitpunkt im Bereich der Dichtung eine Mindesttemperatur zu garantieren, die oberhalb der Temperatur liegt, ab der die Elastizität der Dichtlippe derart abnimmt, dass eine zuverlässige Dichtung nicht mehr garantiert ist.

Nachteilig an diesem Stand der Technik ist zum einen, dass das zusätzliche Heizelement an einen elektrischen Kreis anzuschließen ist, um Wärme zur Verfügung zu stellen. Dies zieht zusätzliche Anschlüsse nach sich, die die Komplexität der Einheit erhöhen. Weiterhin ist ein solches Heizelement hinsichtlich der thermischen Effizienz nachteilig, da nun ein zusätzlicher Energieaufwand aufzubringen ist. Ein weiterer Nachteil des Standes der Technik besteht in der Zuverlässigkeit der Vorrichtung. Sobald das Heizelement oder eine Anschlussleitung defekt ist, ist ein dichter Fluidraum nicht mehr zu gewährleisten.

Die Aufgabe der Erfindung besteht somit darin, die Nachteile aus dem Stand der Technik zu beheben und insbesondere eine Lösung zu offenbaren, bei der bei sämtlichen Betriebsbedingungen ein dichter Fluidraum gewährleistet ist, während zeitgleich keine Abhängigkeit von einer externen Energiezufuhr besteht.

Dies wird erfindungsgemäß dadurch gelöst, dass der Dichtlippenbereich zwei Dichtlippen besitzt, von denen die eine im Überdruckfall und die andere im Unterdruckfall zur dynamisch dichtenden Anlage an der Oberfläche des relativ zum Befestigungsbereich verfahrbaren Kolbens vorbereitet ist. Auf diese Weise ist eine zuverlässige Dichtfunktion unabhängig vom Betriebszustand, also selbst bei sehr geringen Temperaturen gemessen an normalen Umgebungsbedingungen, garantiert. Durch die Aufteilung des Dichtlippenbereichs in zumindest zwei Abschnitte ist ebenfalls eine individuell angepasste Geometrie der jeweiligen Dichtlippe ermöglicht. Je nach Anwendungsfall ist der Dichtlippenbereich somit an den zur Verfügung stehenden Bauraum anpassbar, was die Flexibilität des erfindungsgemäßen Aktors erhöht.

Vorteilhafte Ausführungsformen sind Gegenstand der Unteransprüche und werden nachfolgend näher erläutert.

So ist es von Vorteil, wenn die beiden Dichtlippen in unterschiedliche Richtungen zeigen. Dies stellt sicher, dass eine erste Dichtlippe die eindeutig zugeordnete Aufgabe der Abdichtung zwischen einem Außenraum und einem Zwischenraum, der von den beiden Dichtlippen definiert wird, übernimmt, während eine zweite Dichtlippe die eindeutig definierte Aufgabe der Abdichtung zwischen einem Innenraum und dem Zwischenraum übernimmt. Somit ist eine strikte Trennung der Funktion der einzelnen Dichtlippen vorgenommen. Dies erleichtert den Gestaltungsprozess der ideal angepassten Dichtung. Die Ausrichtung in unterschiedliche Richtung ermöglicht weiterhin eine Anlage der Dichtlippen an dem Kolben, der in einem solchen Winkel verläuft, dass ein hoher Dichtheitsgrad erreicht ist.

In einer weiteren vorteilhaften Ausführungsform sind beide Dichtlippen quer zur Längsrichtung des Kolbens und quer zur Radialrichtung des Kolbens ausgerichtet und sie spannen vorzugsweise zwei Winkelwerte gleichen Betrags zu einer Radialebene auf. Die somit symmetrische Anordnung der ersten und der zweiten Dichtlippe zueinander wirkt sich positiv auf die Wirtschaftlichkeit der Fertigung der Dichtung aus.

Sobald die Dichtung wenigstens vier Flächen im Dichtungsbereich besitzt, ist eine hohe Zuverlässigkeit des Dichtheitsgrades erreicht. Hierbei bilden die erste Dichtlippe und die zweite Dichtlippe jeweils zwei Flächen aus. Insgesamt sind die vier Flächen in eine Außenraumfläche, eine erste Zwischenraumfläche, also die Fläche der ersten Dichtlippe, die in die Richtung des Zwischenraums zeigt, eine zweite Zwischenraumfläche, also die Fläche der zweiten Dichtlippe, die in die Richtung des Zwischenraums zeigt, und eine Innenraumfläche unterteilbar. Jede einzelne dieser Flächen ist auf die jeweils herrschenden Bedingungen anpassbar. Ist beispielsweise unabhängig vom Betriebszustand die Druckdifferenz zwischen dem Innenraum und dem Zwischenraum größer als die Differenz zwischen dem Außenraum und dem Zwischenraum, so sind die jeweiligen Flächen an diesen Zustand flexibel anpassbar.

Es ist ebenso vorteilhaft, wenn zwischen den Dichtlippen der vorzugsweise leere Zwischenraum ausgebildet ist. Dieser wird von dem Dichtlippenbereich der Dichtung und dem Kolben definiert und hat keinen Kanal zum Fluidaustausch mit einem anderen Volumen. Der Druck im Zwischenraum ist vorzugsweise derart gering zu halten, dass sowohl der Druck des Innenraums, als auch der des Außenraums den des Innenraums übersteigt. Somit ist ein Anpressen der jeweiligen Dichtlippen garantiert.

Somit gilt, dass es vorteilhaft ist, wenn die Dichtlippen so auf den Kolben abgestimmt sind, dass der Druck im Zwischenraum niedriger ist als außenseitig des Zwischenraums. So ist ein Abheben der jeweiligen Dichtlippe auch bei tiefen Temperaturen vermieden und eine durchgehend hohe Dichtqualität garantiert.

Wenn beide Dichtlippen im spitzen Winkel an der Mantelfläche des Kolbens anliegen, ist weiterhin ein solcher Aufbau realisiert, dass ein Abklappen der Dichtlippen aufgrund der Geometrie zusätzlich erschwert wird. Der beschriebene Winkel ist hierbei der, der zwischen der Zwischenraumfläche der jeweiligen Dichtlippe und dem Kolben, an dem die Dichtung anliegt, verläuft. Der entsprechende Gegenwinkel, zwischen der Außenraumfläche und dem Kolben beziehungsweise der Innenraumfläche und dem Kolben ist demnach ein stumpfer Winkel, da der Kolben als gerade verlaufender Zylinder ausgestaltet ist.

Insbesondere dadurch, dass die Dichtung aus elastischem, vorzugsweise eine Vorspannung hervorrufenden, beispielsweise einheitlichem, Material aufgebaut ist, werden zusätzliche Vorteile realisiert. So ergibt sich zum einen eine wirtschaftliche Fertigung, zum anderen ist die erfindungsgemäße Dichtung somit in der Lage, kleinere Toleranzen auszugleichen.

Eine vorteilhafte Ausführungsform ist weiterhin dadurch gekennzeichnet, dass der hydrostatische Aktor als hydrostatischer Kupplungsaktor, englisch hydraulic clutch actuator, kurz HCA, ausgebildet ist. Diese Standardkomponente in Antriebssträngen ist somit durch den erfindungsgemäßen Kupplungsaktor zu ersetzen, wodurch die Betriebssicherheit von Antriebssträngen erhöht werden kann, indem lediglich ein Modul ausgetauscht ist.

Erfindungsgemäß folgt in einer weiteren Ausführungsform auch dadurch ein Vorteil, wenn Dichtlippen selbstverstärkend wirken. Unter dem Begriff selbstwirkend wird hierbei verstanden, dass die Kraft mit der die eine Dichtlippe an dem Kolben anliegt proportional zur Druckdifferenz zwischen den einzelnen Volumina ist. So wird bei steigender Druckdifferenz zwischen den durch die Dichtung abzudichtenden Räumen eine höhere Dichtkraft impliziert, was die allgemeine Betriebssicherheit dadurch steigert, dass ein Leckagerisiko minimiert ist.

In anderen Worten kann gesagt werden, dass der Erfindung auf hydrostatische (Kupplungs-)Aktoren mit Dichtungssystemen gerichtet ist. Hierbei wird die Geometrie des Dichtlippenbereichs derart ausgeformt, dass sowohl zum Außenraum, als auch zum Innenraum bei wechselnden Druckverhältnissen eine Selbstverstärkung der jeweiligen Dichtlippe erreicht wird. Somit ist eine Abhängigkeit von der statischen Selbstverstärkung einer Dichtung weitestgehend aufgelöst.

Somit realisiert der erfindungsgemäße Aktor, dass die Unterdruckstabilität der Dichtung verbessert wird, wodurch die Dichtfunktion robuster gegenüber tiefen Temperaturen wird, da die Dichtung beidseitig wirkend ausgeführt ist.

Erfindungsgemäß wirkt demnach insbesondere dann, wenn die zweite Dichtlippe mit der zweiten dynamischen Dichtgeometrie an ihrer elastischen Vorspannungsgrenze angekommen ist, die erste Dichtlippe. Die zweite Dichtlippe ist somit nicht mehr auf den Unterdruckfall auszulegen. Somit ist mit nur unwesentlichem zusätzlichen Bauraumbedarf gegenüber der aus dem Stand der Technik bekannten Dichtungen eine robuste, zuverlässige und wirtschaftliche Dichtung des hydrostatischen Aktors erfüllt.

Somit gilt zusammenfassend, dass dem Problem der Abhängigkeit der Dichtungsqualität von der Temperatur vorgebeugt wird. Hierfür wird eine Dichtung mit mehreren dynamischen Oberflächen offenbart, die selbstverstärkend wirkt.

Die Dichtung weist als vier dynamische Dichtflächen im Dichtlippenbereich auf, wodurch der Zwischenraum definiert ist, der immer einen niedrigeren Druck aufweist als der Innen- oder Außenraum. Die Dichtflächen verlaufen erfindungsgemäß schräg zu dem Zwischenraum und bilden mit diesem also einen spitzen Winkel zur Kolbenfläche. Somit ist die Dichtung auch ohne elastische Vorspannung selbstschließend.

Die Erfindung wird nun nachfolgend anhand von Figuren näher erläutert. Diese zeigen:
- Fig. 1:: eine schematische Ansicht des Aktors und einer Dichtung; und
- Fig. 2:: die erfindungsgemäße Dichtung mit einer ersten Dichtlippe und einer zweiten Dichtlippe.

Die Figuren sind lediglich schematischer Natur und dienen ausschließlich dem Verständnis der Erfindung. Die einzelnen Bezugszeichen können untereinander ausgetauscht werden.

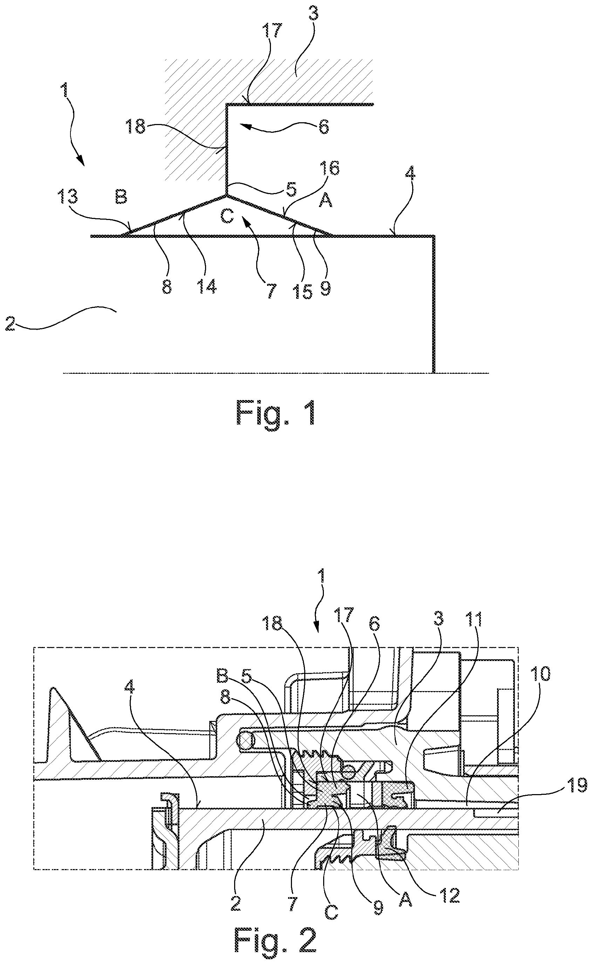

Fig. 1 zeigt eine schematische Ansicht eines erfindungsgemäßen hydrostatischen Aktors 1. Dieser weist um eine Rotationsachse herum angeordnet einen Kolben 2 auf, der innerhalb eines Gehäuses 3, das etwa motorfest gelagert ist, längsverschiebbar angeordnet ist. Der Kolben 2 weist eine nach radial außen zeigende Mantelfläche 4 auf, die eine solche Oberflächenbeschaffenheit besitzt, dass daran eine Dichtung 5 effizient und vollständig dichtend anliegen kann. Die Dichtung 5 ist in einen Befestigungsbereich 6 sowie einen Dichtlippenbereich 7 einteilbar. Der Befestigungsbereich 6 ist als statische Dichtung ausgestaltet, da er keine Relativbewegung zum Gehäuse 3 durchführt. Im Gegensatz hierzu ist der Dichtlippenbereich 7 als dynamisch ausgestaltet, da der Kolben 2 längsverschiebbar ist und es somit zu einer Relativbewegung zwischen dem Dichtlippenbereich 7 und dem Kolben 2 kommt.

Um eine effiziente Dichtung auch bei wechselnden Druckbedingungen zu ermöglichen, ist der Dichtlippenbereich 7 derart ausgestaltet, dass er eine erste Dichtlippe 8 und eine zweite Dichtlippe 9 ausbildet. Die erste Dichtlippe 8 ist zwischen einem Außenraum B und einem Zwischenraum C angeordnet. Eine Außenraumfläche 13 stellt die Grenze zwischen dem Außenraum B und der ersten Dichtlippe 8 dar. Sie ist derart ausgestaltet, dass sie eine für die Abdichtung jener Volumina optimiert ist. Eine erste Zwischenraumfläche 14 ist durch die andere Seite der ersten Dichtlippe 8 realisiert und weist somit in Richtung des Zwischenraums C. Der Druck im Zwischenraum C ist hierbei in vorzugsweise jedem Betriebszustand geringer als der Druck im Außenraum B.

Analog zur ersten Dichtlippe 8 weist auch die zweite Dichtlippe 9 eine Außenfläche und eine Innenfläche auf. Die Innenfläche, auch als zweite Zwischenraumfläche 15 referenziert, ist in Richtung des Zwischenraums C gerichtet, während die äußere Fläche, auch Innenraumfläche 16 referenziert in Richtung eines Innenraums A zeigt. Die vier Flächen 13, 14, 15, 16 sind hinsichtlich ihrer Rauheit und Elastizität derart beschaffen, dass sie eine fluiddichte Abdichtung zwischen dem Kolben 2 und dem Innenraum A, dem Zwischenraum C sowie dem Außenraum B ermöglichen. Aufgrund der Ausrichtungen der beiden Dichtlippen 8, 9 in im Wesentlichen entgegengesetzte Richtungen ist die Dichtung 5 erfindungsgemäß selbstverstärkend, unabhängig davon, ob im Innenraum A oder dem Außenraum B ein größerer Druck herrscht.

Die Anlage des Befestigungsbereichs 6 am im Gehäuse 3 ist über zwei Anschlagflächen realisiert. Über einen Radialanschlag 17 wir die Höhe der Dichtung 5 in Radialrichtung bestimmt, während über einen Axialanschlag 18 die axiale Dichtungsposition festgelegt ist.

Fig. 2 stellt eine weitere Ausführungsform des erfindungsgemäßen hydrostatischen Aktors 1 dar. Hierbei ist die Darstellung der Dichtung 5 an einer weiteren Ausführungsform orientiert. Der Zylinder 2 ist als Hohlzylinder ausgeführt und das Gehäuse 3 ist etwa als Gussteil ausgestaltet, das in seiner Form flexibel ist. Zwischen dem Gehäuse 3 und dem Kolben 2 ist die Dichtung 5 mit dem Befestigungsbereich 6 und dem Dichtlippenbereich 7 angeordnet. Das Verhältnis des Zwischenvolumens C zu den Volumina A und B ist hierbei kleiner eins. Aufgrund der im Wesentlichen gleichen Winkel der ersten Dichtlippe 8, wie sie auf dem Kolben 2 läuft und der zweiten Dichtlippe 9, wie sie auf dem Kolben 2 läuft, ist eine Selbstverstärkung der Dichtung 5 auch hier realisiert, da eine Druckzunahme sowohl im Innenraum A, als auch im Außenraum B zu einer Verstärkung der Dichtkraft führt.

Von der Dichtung 5 weiter in Richtung des Innenraums 8 verlaufend ist eine zweite Dichtung 11 angeordnet. Diese trennt das Innenvolumen A von einem Fluidraum 10. Die zweite Dichtung 11 dient somit der erhöhten Sicherheit bzw. Robustheit des gesamten Dichtungssystems. Eine weitere, dritte Dichtung 12 ist radial innerhalb der Dichtung 5 sowie der zweiten Dichtung 11 angeordnet. Die zweite Dichtung 11 und die dritte Dichtung 12 weisen ebenfalls einen Befestigungsbereich sowie einen Dichtlippenbereich auf, die jedoch keine erste Dichtlippe und keine zweite Dichtlippe aufweisen, wie dies bei der Dichtung 5 der Fall ist. Der Radialanschlag 17 erfüllt auch hier die Funktion der Positionsbestimmung bzw. Zentrierung der Dichtung 5, ebenso wie der Axialanschlag 18.

Es sei als noch erklärend ausgeführt, dass die Dichtung 11 in einem bestimmten Betriebszustand durch einen Bypass 19 unterwandert werden kann. In diesem Zustand soll Fluid, insbesondere Luft, ausgeglichen werden, d.h. zu einem nicht dargestellten Reservoir geführt werden.

So ist der erfindungsgemäße hydrostatische Aktor 1 bei Gewährleistung einer hohen Dynamik stets in der Lage, eine effiziente Dichtung zwischen dem Innenraum A und dem Außenraum B vorzunehmen, indem ein, verglichen mit den Räumen A und B, geringer Unterdruck im Zwischenraum C sichergestellt ist.

### Bezugszeichenliste

- 1: Hydrostatischer Aktor
- 2: Kolben
- 3: Gehäuse
- 4: Mantelfläche
- 5: Dichtung
- 6: Befestigungsbereich
- 7: Dichtlippenbereich
- 8: Erste Dichtlippe
- 9: Zweite Dichtlippe
- 10: Fluidraum
- 11: Zweite Dichtung
- 12: Dritte Dichtung
- 13: Außenraumfläche
- 14: Erste Zwischenraumfläche
- 15: Zweite Zwischenraumfläche
- 16: Innenraumfläche
- 17: Radialanschlag
- 18: Axialanschlag
- 19: Bypass

- A: Innenraum
- B: Außenraum
- C: Zwischenraum

## Patentansprüche

1. Hydrostatischer Aktor (1) für eine Kraftfahrzeugbaugruppe, mit einem Kolben (2), der innerhalb eines Gehäuses (3) längsverschieblich angeordnet ist, wobei zwischen der Mantelfläche (4) des Kolbens (2) und dem Gehäuse (3) eine Dichtung (5) fluiddichtend eingesetzt ist, wobei die Dichtung (5) einen Befestigungsbereich (6) besitzt, an dem sie statisch dichtend an dem Gehäuse (3) anliegt und einen Dichtlippenbereich (7) besitzt, an dem sie zu dem sich relativ zum Befestigungsbereich (6) verlagerbaren Kolben (2) dynamisch dichtend anliegt, **dadurch gekennzeichnet, dass** der Dichtlippenbereich (7) zwei Dichtlippen (8, 9) besitzt, von denen die eine im Überdruckfall und die andere im Unterdruckfall zur dynamisch dichtenden Anlage an der Oberfläche des relativ zum Befestigungsbereich (6) verfahrbaren Kolbens (2) oder des Gehäuses (3) vorbereitet ist.

2. Hydrostatischer Aktor (1) nach Anspruch 1, **dadurch gekennzeichnet, dass** die beiden Dichtlippen (8, 9) in unterschiedliche Richtungen zeigen.

3. Hydrostatischer Aktor (1) nach einem der Ansprüche 1 oder 2, **dadurch gekennzeichnet, dass** beide Dichtlippen (8, 9) quer zur Längsrichtung des Kolbens (2) und quer zur Radialrichtung des Kolbens (2) ausgerichtet sind.

4. Hydrostatischer Aktor (1) nach einem der Ansprüche 1 bis 3, **dadurch gekennzeichnet, dass** die Dichtung (5) wenigstens vier Flächen (13, 14, 15, 16) im Dichtungsbereich (7) besitzt.

5. Hydrostatischer Aktor (1) nach einem der Ansprüche 1 bis 4, **dadurch gekennzeichnet, dass** zwischen den Dichtlippen (8, 9) ein Zwischenraum (C) ausgebildet ist.

6. Hydrostatischer Aktor (1) nach Anspruch 4, **dadurch gekennzeichnet, dass** die Dichtlippen (8,9) so auf den Kolben (2) abgestimmt sind, dass der Druck im Zwischenraum (C) niedriger ist als außenseitig des Zwischenraums (C).

7. Hydrostatischer Aktor (1) nach einem der Ansprüche 1 bis 6, **dadurch gekennzeichnet, dass** beide Dichtlippen (8, 9) im spitzen Winkel an der Mantelfläche (4) des Kolbens (2) anliegen.

8. Hydrostatischer Aktor (1) nach einem der Ansprüche 1 bis 7, **dadurch gekennzeichnet, dass** die Dichtung (5) aus elastischem Material aufgebaut ist.

9. Hydrostatischer Aktor (1) nach einem der Ansprüche 1 bis 8, **dadurch gekennzeichnet, dass** der hydrostatische Aktor (1) als hydrostatischer Kupplungsaktor ausgebildet ist.

10. Hydrostatischer Aktor (1) nach einem der Ansprüche 1 bis 9, **dadurch gekennzeichnet, dass** die Dichtlippen (8, 9) selbstverstärkend wirken.

## Claims

1. A hydrostatic actuator (1) for a motor vehicle assembly, having a piston (2) which is arranged to be longitudinally displaceable within a housing (3), wherein a seal (5) is inserted in a fluid-tight manner between the lateral surface (4) of the piston (2) and the housing (3), wherein the seal (5) has a fastening area (6) on which it rests against the housing (3) in a statically sealing manner and has a sealing lip area (7), on which the seal rests in a dynamically sealing manner on the piston (2) which is displaceable relative to the fastening area (6), **characterised in that** the sealing lip area (7) has two sealing lips (8, 9), one of which is prepared in the case of overpressure and the other in the case of negative pressure for dynamic sealing contact on the surface of the piston (2) that is moveable relative to the fastening area (6) or the housing (3).

2. The hydrostatic actuator (1) according to claim 1, **characterised in that** the two sealing lips (8, 9) point in different directions.

3. The hydrostatic actuator (1) according to any one of claims 1 or 2, **characterised in that** both sealing lips (8, 9) are aligned transversely to the longitudinal direction of the piston (2) and transversely to the radial direction of the piston (2).

4. The hydrostatic actuator (1) according to any one of claims 1 to 3, **characterised in that** the seal (5) has at least four surfaces (13, 14, 15, 16) in the sealing area (7).

5. The hydrostatic actuator (1) according to any one of claims 1 to 4, **characterised in that** an intermediate space (C) is formed between the sealing lips (8, 9).

6. The hydrostatic actuator (1) according to claim 4, **characterised in that** the sealing lips (8, 9) are coordinated to the piston (2) in such a way that the pressure in the intermediate space (C) is lower than on the outside of the intermediate space (C).

7. The hydrostatic actuator (1) according to any one of claims 1 to 6, **characterised in that** both sealing lips (8, 9) rest against the lateral surface (4) of the piston (2) at an acute angle.

8. The hydrostatic actuator (1) according to any one of claims 1 to 7, **characterised in that** the seal (5) is made of an elastic material.

9. The hydrostatic actuator (1) according to any one of claims 1 to 8, **characterised in that** the hydrostatic actuator (1) is designed as a hydrostatic clutch actuator.

10. The hydrostatic actuator (1) according to any one of claims 1 to 9, **characterised in that** the sealing lips (8, 9) have a self-reinforcing effect.

## Revendications

1. Actionneur hydrostatique (1) pour un module de véhicule automobile, comprenant un piston (2) qui est disposé de manière déplaçable longitudinalement à l'intérieur d'un boîtier (3), un joint d'étanchéité (5) étant inséré de manière étanche aux fluides entre la surface d'enveloppe (4) du piston (2) et le boîtier (3), le joint d'étanchéité (5) possédant une région de fixation (6) au niveau de laquelle il s'applique statiquement de manière hermétique contre le boîtier (3) et possède une région de lèvre d'étanchéité (7) au niveau de laquelle il s'applique de manière dynamique hermétiquement vers le piston (2) déplaçable par rapport à la région de fixation (6), **caractérisé en ce que** la région de lèvre d'étanchéité (7) possède deux lèvres d'étanchéité (8, 9), dont l'une, en cas de surpression, et l'autre, en cas de dépression, est prête à venir en appui de manière dynamique hermétiquement contre la surface du boîtier (3) ou du piston (2) déplaçable par rapport à la région de fixation (6).

2. Actionneur hydrostatique (1) selon la revendication 1, **caractérisé en ce que** les deux lèvres d'étanchéité (8, 9) pointent dans des directions différentes.

3. Actionneur hydrostatique (1) selon l'une quelconque des revendications 1 ou 2, **caractérisé en ce que** les deux lèvres d'étanchéité (8, 9) sont alignées transversalement à la direction longitudinale du piston (2) et transversalement à la direction radiale du piston (2).

4. Actionneur hydrostatique (1) selon l'une quelconque des revendications 1 à 3, **caractérisé en ce que** le joint d'étanchéité (5) possède au moins quatre surfaces (13, 14, 15, 16) dans la région d'étanchéité (7).

5. Actionneur hydrostatique (1) selon l'une quelconque des revendications 1 à 4, **caractérisé en ce qu'**un espace intermédiaire (C) est ménagé entre les lèvres d'étanchéité (8, 9).

6. Actionneur hydrostatique (1) selon la revendication 4, **caractérisé en ce que** les lèvres d'étanchéité (8, 9) sont adaptées au piston (2) de telle sorte que la pression dans l'espace intermédiaire (C) soit plus faible qu'à l'extérieur de l'espace intermédiaire (C).

7. Actionneur hydrostatique (1) selon l'une quelconque des revendications 1 à 6, **caractérisé en ce que** les deux lèvres d'étanchéité (8, 9) s'appliquent contre la surface d'enveloppe (4) du piston (2) selon un angle aigu.

8. Actionneur hydrostatique (1) selon l'une quelconque des revendications 1 à 7, **caractérisé en ce que** le joint d'étanchéité (5) est fabriqué en matériau élastique.

9. Actionneur hydrostatique (1) selon l'une quelconque des revendications 1 à 8, **caractérisé en ce que** l'actionneur hydrostatique (1) est réalisé sous la forme d'un actionneur d'embrayage hydrostatique.

10. Actionneur hydrostatique (1) selon l'une quelconque des revendications 1 à 9, **caractérisé en ce que** les lèvres d'étanchéité (8, 9) ont un effet d'auto-renforcement.
